# EUROPÄISCHE PATENTSCHRIFT

(11) **EP 2 131 152 B1**
(45) Veröffentlichungstag und Bekanntmachung des Hinweises auf die Patenterteilung: **11.07.2018**
(21) Anmeldenummer: 09100277.4
(22) Anmeldetag: 12.05.2009
(51) Int. Cl.: G01C 21/34, G08G 1/00

(54) **Navigationssystem und Verfahren zum Betreiben eines Navigationssystems**
Navigation system and method for operating the same
Système de navigation et procédé de fonctionnement d'un système de navigation

(30) Priorität: 05.06.2008 DE 102008002233
(43) Veröffentlichungstag der Anmeldung: 09.12.2009
(73) Patentinhaber: ROBERT BOSCH GMBH, 70442 Stuttgart (DE)
(72) Erfinder: May, Thomas, 38302, Wolfenbuettel (DE); Walossek, Erik, 31139, Hildesheim (DE); Jakoblew, Sascha, 31141, Hildesheim (DE)

(56) Entgegenhaltungen:
- EP-A2- 1 717 558
- JP-A- 2006 275 965
- JP-A- 2008 058 021

## Beschreibung

### STAND DER TECHNIK

Die vorliegende Erfindung betrifft ein Navigationssystem und Verfahren zum Betreiben eines Navigationssystems.

Navigationssysteme können den Fahrer beim Ermitteln günstiger Routen von einem Startpunkt zu einem Ziel unterstützen. Diese können anhand von Straßenkarten eine kürzeste oder eine schnellste Route ermitteln.

Mit einer Einführung von einer allgemeinen Maut für alle Kraftfahrzeug wird das Interesse an den kostengünstigsten neben der kürzesten oder schnellsten Route wachsen. Die Mautgebühren können nach festen, aber auch nach sich ändernden Mautschlüsseln berechnet werden.

Ein Mauterfassungsgerät hat Zugriff auf die Mautschlüssel, um die anfallenden Mautgebühren zu berechnen. Jede Generation eines Mauterfassungsgeräts wird von zuständigen Behörden auf Manipulationssicherheit und Verfügbarkeit geprüft, bevor sie zum Verkauf und Verwendung freigegeben wird. Die komplexen Algorithmen und fortlaufend erweiterten Datenbanken für eine Routenermittlung müssten bei einer Integration in dem Mauterfassungsgerät jedes Mal zertifiziert werden.

Aus der JP 2006 275965 A ist ein Navigationssystem mit einer Datenverarbeitungseinrichtung für Mautdaten bekannt, wobei empfohlene Routen bzw. Mautgebühren angezeigt werden können.

Die EP 1 717 558 A1 zeigt und beschreibt ein Verfahren zum Betreiben eines Navigationssystems, das ein Anzeigeelement, eine Eingabeeinrichtung, eine Datenverarbeitungseinrichtung bzw. einen Routenermittler und eine Schnittstelle mit einem Kommunikationskanal für ein Mautsystem umfasst. Das Verfahren beinhaltet die Schritte: Ermitteln von Routen, die von einem ausgewählten Start zu einem ausgewählten Ziel führen, und Abfragen von Mautgebühren für die ermittelten Routen von einem Mauterfassungsgerät, wobei für Routenabschnitte entlang der ermittelten Routen durch das Navigationssystem Verkehrsinformationen von dem Mauterfassungsgerät abgefragt werden. Das Navigationssystem ist mit einem GPS-Sensor versehen. Das Navigationssystem ist mit dem Mauterfassungsgerät verbunden. Das Mauterfassungsgerät ist außerdem mit einer Empfangseinrichtung versehen. Mit der Anzeige des Navigationssystems kann eine Kostenangabe bzw. eine Angabe von Parkgebühren erfolgen.

### OFFENBARUNG DER ERFINDUNG

Das erfindungsgemäße Verfahren zum Betreiben eines Navigationssystems aus Anspruch 1 erfolgt mit den im Anspruch 1 genannten Schritten.

Das Navigationssystem kann getrennt von dem Mauterfassungsgerät aufgebaut werden. Eine notwendige Zertifizierung eines Navigationssystems ist nicht notwendig.

Das erfindungsgemäße Navigationssystem umfasst ein Anzeigeelement, eine Eingabeeinrichtung, eine Datenverarbeitungseinrichtung, einen Routenermittler und eine Schnittstelle mit einem Kommunikationskanal für ein Mauterfassungsgerät, wobei die Schnittstelle zum Kommunizieren mit dem Mauterfassungsgerät, das eine Positionsermittlungseinrichtung, die ein satellitengestütztes Ortungssystem aufweist, und eine Sende- und Empfangseinrichtung umfasst, ausgeführt ist.

### KURZE BESCHREIBUNG DER ZEICHNUNGEN

Die vorliegende Erfindung wird nachfolgend anhand bevorzugter Ausführungsformen und der Figuren erläutert. In den Figuren zeigen:
- Fig. 1: ein Blockdiagramm eines Fahrerinformationssystems und
- Fig. 2: ein Ablaufdiagramm einer Ausführungsform.

### AUSFÜHRUNGSFORMEN DER ERFINDUNG

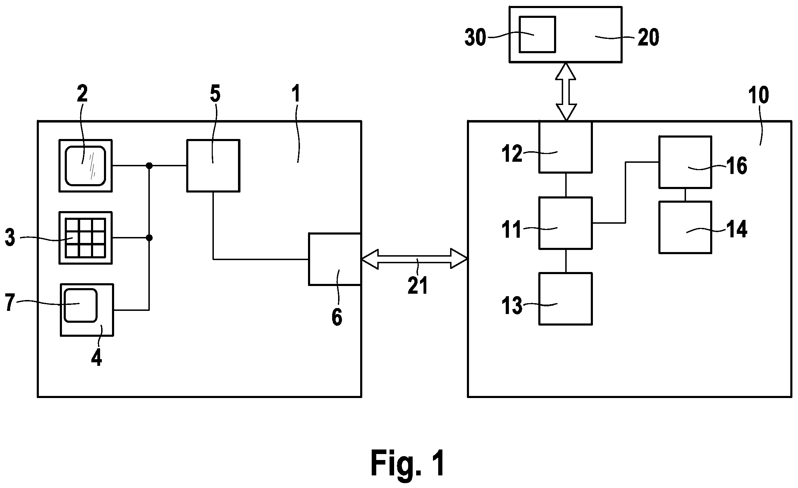

Fig. 1 zeigt eine erste Ausführungsform eines Navigationsgeräts 1, welches nachfolgend als Beispiel für ein Fahrerinformationssystem als Navigationssystem dient. Das Navigationsgerät 1 beinhaltet ein Anzeigenelement 2, eine Eingabeeinrichtung 3, einen Routenermittler 4, eine Datenverarbeitungseinrichtung 5 und eine Schnittstelle 6.

Das Anzeigenelement 2 dient zum Darstellen von Straßenkarten, Wegbeschreibungen, Statusinformationen, zurückgelegter Wegstrecke etc. Das Anzeigenelement 2 kann beispielsweise ein Flachbildschirm sein.

Mittels der Eingabeeinrichtung 3 kann der Bediener einen Startpunkt und ein Ziel für eine Route vorgeben, Kartenausschnitte auswählen, Einstellungen an dem Navigationsgerät 1 vornehmen, etc. Die Eingabeeinrichtung 3 kann eine Tastatur, eine druckempfindliche Fläche auf dem Anzeigenelement 2, eine Spracherkennung, etc. umfassen.

Der Routenermittler 4 ist eine spezielle Datenverarbeitungseinrichtung, die auf Straßenkarten zurückgreift und verschiedene Routen zwischen dem Startpunkt und dem Ziel ermittelt. Die Straßenkarten können in einem Speicher 7 des Routenermittlers 4 gespeichert sein. Anhand von Auswahlkriterien und Ausschlusskriterien wird eine Vorauswahl der ermittelten Routen automatisch getroffen. Die Auswahlkriterien können eine Obergrenze an die ermittelten Routenlänge oder -Dauer verglichen zu der kürzesten oder schnellsten ermittelten Strecke umfassen. Die Ausschlusskriterien sind beispielsweise keine Routenabschnitte auf Autobahnen oder Fährstrecken für eine Route zu verwenden.

Ein Mauterfassungsgerät 10 ist in dem gleichen Fahrzeug angeordnet wie das Navigationsgerät 1. Die beiden Geräte 1, 10 können auch in einem Gehäuse integriert sein.

Das Mauterfassungsgerät 10 weist eine Positionsermittlungseinrichtung 11, eine Sende- und Empfangseinrichtung 12 und optional eine Gebührenzähleinrichtung 13 auf. Die Positionsermittlungseinrichtung 11 kann ein satellitengestütztes Ortungssystem umfassen, z.B. basierend auf GPS oder Galileo. Unterstützend kann das Mauterfassungsgerät 10 Trägheitssensoren, Gyrosensoren oder weitere Bewegungssensoren aufweisen, um seine aktuelle Position zu ermitteln.

Eine Variante des Mauterfassungsgeräts 10 sendet mittels der Sende- und Empfangseinrichtung 12 seine aktuelle Position oder die von ihm zurückgelegten Wegstrecken an eine Mautzentrale. Die Mautzentrale bestimmt anhand eines Mautschlüssels und der zurückgelegten Wegstrecke des Mauterfassungsgeräts 10 eine Mautgebühr. Die Mautgebühr empfängt das Mauterfassungsgerät 10 mit seiner Sende- und Empfangseinrichtung 12. Die Sende- und Empfangseinrichtung 12 kann ein Mobilfunkmodul sein und beispielsweise gemäß dem GSM-Standard Daten übertragen.

Bei einer anderen Variante weist das Mauterfassungsgerät 10 eine Gebührermittlungseinrichtung 16 auf, die eine fällige Mautgebühr für eine zurückgelegte Wegstrecke ermittelt. In einem Speicher 14 des Mauterfassungsgeräts sind dafür Mautschlüssel abgespeichert, auf die die Gebührenermittlungseinrichtung 16 zugreifen kann. Die Mautschlüssel legen fest, wie hoch die Mautgebühr pro gefahrenem Kilometer, einer Dauer einer benutzten Straße oder Verkehrseinrichtung (z.B. Parkplatz), in Abhängigkeit der benutzten Straßen, in Abhängigkeit einer Fahrzeugklasse des verwendeten Fahrzeugs etc. ist. Die ermittelte Mautgebühr wird an die Mautzentrale 20 übermittelt. Die Übermittlung der fälligen Mautgebühr kann erfolgen, wenn die Mautgebühr einen Mindestbetrag überschreitet.

Ein Beispiel für Mautschlüssel wären 1,5 ct/km für Autobahnen, 1,7 ct/km für Bundesstraßen, 1,7 ct/km für Landstraßen und 2,0 ct/km für andere Verkehrswege. Für einzelne Streckenabschnitte können auch detaillierte Mautschlüssel vorgegeben sein. Ein Mautschlüssel für einen ersten Streckenabschnitt kann beispielsweise 2 ct/km, für einen zweiten Streckenabschnitt 1,9 ct/km, für einen dritten Streckenabschnitt 0 ct/km und für einen vierten Streckenabschnitt 1,5 ct/km betragen. Weiter kann eine zeitliche Staffelung der Mautschlüssel vorgesehen sein. Beispielsweise gilt innerorts ein Mautschlüssel von 2,5 ct/km von 7 bis 9 Uhr, von 2 ct/km von 9 bis 16 Uhr, 2,5 ct/km von 16 bis 18 und von 0,8 ct/km von 18 bis 7 Uhr.

Das Navigationsgerät 1 und das Mauterfassungsgerät 10 kommunizieren über einen speziell eingerichteten Kanal 21. Dies ermöglicht dem Navigationsgerät 1 eine erweiterte Routenplanung.

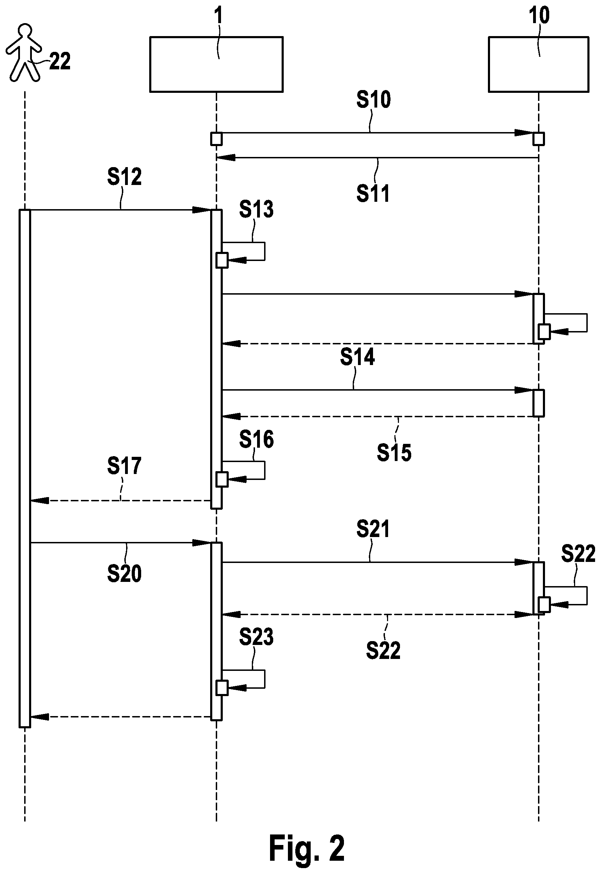

Eine Ausführungsform eines Verfahrens zur Routenplanung wird anhand des Flussdiagramms von Figur 2 erläutert.

Die Datenverarbeitungseinrichtung 5 des Navigationsgeräts 1 kann über dessen Schnittstelle 6 aktuelle Mautschlüssel von dem Mauterfassungsgerät 10 abfragen (S10). Sofern das Mauterfassungsgerät 10 die aktuellen Mautschlüssel in einem eigenen Speicher 14 nicht lokal abspeichert hat, sendet es eine Aufforderung an die Mautzentrale 20 zur Übermittlung der aktuellen Mautschlüssel (S11). Die Mautschlüssel können in Abhängigkeit von Straßentypen, Autobahn, Landstraße, innerstädtische Straße, City-Bereiche etc. unterschiedlich festgelegt werden.

Nachdem ein Benutzer 22 einen Startpunkt und ein Ziel eingegeben hat (S12), ermittelt der Routenermittler 4 wenigstens eine Route (S13). Anhand der zuvor abgefragten aktuellen Mautschlüssel kann die Datenverarbeitungseinrichtung 5 eine Mautgebühr für die Routen schätzen.

Aus den ermittelten Routen kann anhand der geschätzten Mautgebühren eine Gruppe ausgewählt werden. Als Kriterium für die Auswahl kann ein maximaler Unterschied der Mautgebühr einer Route verglichen zu der Route mit der geringsten Mautgebühr dienen. Der maximale Unterschied kann relativ oder absolut festgelegt werden.

Einzelnen Routenabschnitten kann zeitlich oder lokal begrenzt ein besonderer Mautschlüssel zugewiesen sein. Eine Verkehrslenkung kann durch gestaffelte Beträge der Mautschlüssel erfolgen. Beispielsweise kann in einem Wohngebiet nachts ein Mautschlüssel erhöht werden, wenn entlang dem Streckenabschnitt eine Baustelle ist, ein erhöhtes Verkehrsaufkommen aufgrund einer Messe, einem sportlichen oder kulturellem Ereignis zu erwarten ist.

Die Datenverarbeitungseinrichtung 5 kann eine weitere Anfrage an das Mauterfassungsgerät 10 richten, um Mautschlüssel für sämtliche Abschnitte der Route abzufragen (S14), einschließlich möglicher lokaler und zeitlich begrenzt zugewiesener Mautschlüssel. Die entsprechenden Mautschlüssel übermittelt das Mauterfassungsgerät 10 auf die Anfrage.

Alternativ kann die Datenverarbeitungseinrichtung 5 auch den Mautschlüssel nur für Abschnitte abfragen, die auf einer der ermittelten Routen liegen. Hierbei empfängt die Datenverarbeitungseinrichtung 5 die allgemeinen Mautschlüssel in Abhängigkeit der Straßentypen entlang einer Route und gegebenenfalls auch zeitlich oder lokal begrenzt zugewiesener Mautschlüssel (S15).

Die Datenverarbeitungseinrichtung 5 berechnet für alle vom Routenermittler 4 ermittelten Routen oder die ausgewählte Gruppe aus den Routen die anfallende Mautgebühr unter Berücksichtigung aller Mautschlüssel (S16).

Auf dem Anzeigenelement 2 werden dem Bediener die Routen zusammen mit den berechneten Mautgebühren angezeigt (S17). Der Bediener kann eine der Routen mittels der Eingabeeinrichtung 3 auswählen.

Bei einer anderen Ausführungsform sendet die Datenverarbeitungseinrichtung 5 die ermittelten Routen an das Mauterfassungsgerät 10. Das Mauterfassungsgerät 10 bestimmt für alle übermittelten Routen die gesamte Mautgebühr vom Startpunkt bis zum Endpunkt. Die jeweiligen Mautgebühren werden an die Datenverarbeitungseinrichtung 5 gesendet. Auf dem Anzeigenelement 2 werden dem Bediener die Routen zusammen mit den übertragenen Mautgebühren angezeigt (S17). Der Bediener kann eine der Routen mittels der Eingabeeinrichtung 3 auswählen.

Das Navigationsgerät 1 kann das Mauterfassungsgerät 10 die ausgewählte Route über die Schnittstelle 6 mitteilen, mit der Aufforderung, die ausgewählte Route einem Server 30 der Mautzentrale 20 weiterzuleiten.

Die Auswahl der Route kann durch eine entsprechende Betätigung der Eingabeeinrichtung erfolgen (S20). Alternativ ermittelt das Navigationsgerät, entlang welcher Route sich das Fahrzeug bewegt. Diese ermittelte Route wird dem Mauterfassungsgerät mitgeteilt (S21).

Die Mautzentrale 20 kann basierend auf eingehenden, geplanten Routen der Mauterfassungsgeräte 10 von verschiedenen Verkehrsteilnehmern eine Prognose für die kommende Verkehrsauslastung der Streckenabschnitte ermitteln (S22). Die Prognose kann auf dem Server bereitgestellt werden. Die Mauterfassungsgeräte 10 erhalten Zugriff auf den Server, um die Prognose abzufragen.

Bei einer Ausfuhrungsform des Navigationsgeräts 1 fragt die Datenverarbeitungseinrichtung 5 eine Verkehrprognose für die ermittelten Routen ab (S22). Die Anfrage richtet die Datenverarbeitungseinrichtung 5 über die Schnittstelle 6 an das Mauterfassungsgerät 10. Das Mauterfassungsgerät 10 fragt die für die Streckenabschnitte der Route die Verkehrsprognosen von dem Server der Mautzentrale 20 ab.

Die Verkehrsprognose kann Staumeldungen, die mittlere Geschwindigkeit der Fahrzeuge auf einem Streckenabschnitt, die Verkehrsdichte etc. umfassen.

Neben oder anstelle der Verkehrsprognose können von dem Server auch Daten über die aktuelle Verkehrslage bereitgestellt werden. Die Verkehrslage kann die aktuelle mittlere Geschwindigkeit der Fahrzeuge auf einem Streckenabschnitt, die aktuelle Verkehrsdichte und/oder aktuelle Wetterbedingungen etc. angeben.

Die Verkehrsinformationen, d.h. Verkehrsprognose und aktuelle Verkehrslage, können beim Ermitteln und/oder Auswählen von Routen berücksichtigt werden (S23).

Die in dem Speicher abgespeicherten Karten enthalten typischerweise Angaben über die zulässigen oder typischen Reisegeschwindigkeiten auf den Routenabschnitten. Diese Angabe der Geschwindigkeit kann pauschal für einzelne Straßentypen, wie Straße innerorts, Landstraße, Autobahn, etc. angegeben sein. Für einzelne oder alle Streckenabschnitte können auch detaillierte Informationen über die zulässige Höchstgeschwindigkeit angegeben sein. Weiter kann eine zeitliche Staffelung der Mautschlüssel vorgesehen sein. Der Fahrer eines Fahrzeuges kann auch aufgrund eigener Kenntnis ihm bekannter Streckenabschnitte dem Navigationsgerät 1 eine typische Reisegeschwindigkeit eingeben.

Die Datenverarbeitungseinrichtung 5 fragt die Verkehrsinformationen von dem Mauterfassungsgerät 10 ab. Die Anfrage wird von dem Mauterfassungsgerät 10 an den Server weitergeleitet und die Rückantwort mit der Verkehrsinformation der Datenverarbeitungseinrichtung 5 zur Verfügung gestellt.

Das Mauterfassungsgerät 10 fragt die Verkehrslage ab und leitet die Daten über die Schnittstelle 6 an die Datenverarbeitungseinrichtung 5 weiter.

Um eine Datenübertragung zwischen dem Server und dem Mauterfassungsgerät 10 zu minimieren, kann die Anfrage nach den Verkehrsinformationen auch auf die für die Routenplanung in Frage kommenden Streckenabschnitte beschränkt werden. Hierzu werden zunächst die Routen von dem Routenermittler 4 ermittelt. Die Verkehrsinformationen werden für alle Streckenabschnitte abgefragt, die auf den ermittelten Routen liegen.

Die Datenverarbeitungseinrichtung 5 prüft, ob die in den Karten angegebenen Geschwindigkeiten eingehalten werden können. Liegen die aktuellen Reisegeschwindigkeiten unterhalb der in den Karten angegebenen Geschwindigkeit, wird bei der Routenplanung die geringere Geschwindigkeit berücksichtigt.

Die Datenverarbeitungseinrichtung 5 prüft ferner, ob für einen Streckenabschnitt eine Verkehrsprognose vorliegt. Zunächst schätzt die Datenverarbeitungseinrichtung 5, zu welchem Zeitpunkt sich das Fahrzeug auf dem Streckenabschnitt befinden wird, wenn die ermittelte Route verwendet wird. Aus der Verkehrsprognose für diesen Zeitpunkt wird die für die Routenplanung relevante Geschwindigkeit ermittelt, wenn sie geringer als die aus dem Kartenmaterial angegebene Geschwindigkeit ist.

Die Schnittstelle 6 zwischen dem Navigationsgerät 1 und dem Mauterfassungsgerät 10 kann durch eine drahtgebundene Schnittstelle, z.B. serielle Übermittlung, USB, Ethernet, CAN, Powerline Communication, oder eine optische Schnittstelle, z.B. MOST, firewire, oder eine Funkschnittstelle, z.B. bluetooth, WLAN erfolgen.

Die Schnittstelle 6 kann so konfiguriert werden, dass ein automatischer Verbindungsaufbau zwischen dem Navigationsgerät 1 und dem Mauterfassungsgerät 10 erfolgt. Bei dem ersten Verbindungsaufbau kann eine Zustimmung von dem Benutzer abgefragt werden. Ein nachfolgender Verbindungsaufbau nutzt eine Kennung des Navigationsgeräts 1 und eine Kennung des Mauterfassungsgeräts 10 für die selbsttätige Verbindung.

Neben den bereits beschriebenen Ausführungsformen können noch weitere Daten über die Schnittstelle übertragen werden.

Das Fahrerinformationssystem kann beispielsweise Positionsdaten von dem Mauterfassungsgerät 10 abfragen. Hierdurch kann ggf. auf eine Positionsbestimmungseinrichtung in dem Fahrerinformationssystem verzichtet werden. Das Fahrerinformationssystem kann in regelmäßigen Abständen eine Anfrage nach der aktuellen Position an das Mauterfassungsgerät 10 richten. Alternativ übermittelt das Fahrerinformationssystem eine Anfrage an das Mauterfassungsgerät 10, die aktuelle Position in regelmäßigen Abständen auszugeben.

Falls das Fahrerinformationssystem seine Position bestimmen kann, kann es seine Positionsdaten an das Mauterfassungsgerät 10 zur genaueren Positionsbestimmung übertragen.

Eine weitere Ausführungsform nutzt das Mobilfunkmodul 12 des Mauterfassungsgeräts 10, um Telefongespräche, SMS oder andere Mobilfunkanwendungen über das Mauterfassungsgerät abzuwickeln. Das Mauterfassungsgerät 10 ist standardmäßig mit einem Mobilfunkmodul 12 zum Empfangen und Senden von Telefonsignalen nach dem GSM-Standard ausgerüstet. Das Mauterfassungsgerät 10 kann einen gekapselten Kanal zu dem Mobilfunkmodul 12 bereitstellen. Über die Schnittstelle 6 kann das Fahrerinformationssystem auf den Kanal zugreifen und Sprachdaten an das Mobilfunkmodul 12 weiterleiten.

Das Fahrerinformationssystem kann über die Schnittstelle 6 eine Statusabfrage an das Mauterfassungsgerät 10 richten, um die Verfügbarkeit des Mobilfunkmoduls 12 abzufragen. Ferner können die zur Verfügung stehenden Übertragungsprotokolle, z.B. GPRS, EGPRS, EDGE, UMTS zur Datenübertragung oder die anwählbaren Provider abgefragt werden. Daten, z.B. SMS, können von dem Fahrerinformationssystem über das Mobilfunkmodul 12 des Mauterfassungsgeräts 10 entsprechend der rückgemeldeten Protokolle übertragen werden.

Das Mauterfassungsgerät 10 kann eingehende Telefongespräche an die Schnittstelle 6 übertragen.

Das Mauterfassungsgerät 10 kann einen Switch aufweisen, der prüft, ob die an das Mauterfassungsgerät 10 gesendeten Daten an das Mauterfassungsgerät adressiert sind. Falls Daten eine andere Zieladresse aufweisen, werden diese an die Schnittstelle 6 zur Kommunikation mit dem Fahrerinformationssystem weitergeleitet.

## Patentansprüche

1. Verfahren zum Betreiben eines Navigationssystems (1), das ein Anzeigeelement (2), eine Eingabeeinrichtung (3), eine Datenverarbeitungseinrichtung (5), einen Routenermittler (4) und eine Schnittstelle (6) mit einem Kommunikationskanal (21) für ein Mauterfassungsgerät (10) umfasst, wobei das Mauterfassungsgerät (10) in dem gleichen Fahrzeug angeordnet ist, wie das Navigationssystem (1), mit den Schritten:
Ermitteln von Routen, die von einem ausgewählten Start zu einem ausgewählten Ziel führen;
Abfragen von Mautgebühren für die ermittelten Routen von einem Mauterfassungsgerät, wobei für Routenabschnitte entlang der ermittelten Routen durch das Navigationssystem (1) Verkehrsinformationen von dem Mauterfassungsgerät (10) abfragt werden, wobei die ermittelte Routen zusammen mit den abgefragten Mautgebühren angezeigt werden, **dadurch gekennzeichnet, dass** das Mauterfassungsgerät (10) eine Positionsermittlungseinrichtung (11), die ein satellitengestütztes Ortungssystem aufweist, und eine Sende- und Empfangseinrichtung (12) umfasst, wobei mit der Sende- und Empfangseinrichtung (12) das Mauterfassungsgerät (10) seine aktuelle Position oder die von ihm zurückgelegte Wegstrecke an eine Mautzentrale (20) sendet, wobei das Mauterfassungsgerät (10) die Verkehrsinformationen von einem Server (30) für Verkehrsinformationen lädt.

2. Verfahren nach Anspruch 1, **dadurch gekennzeichnet, dass** die Verkehrsinformation an das Navigationssystem (1) übermittelt wird, wenn das Mauterfassungsgerät (10) und/oder der Server (30) eine Abweichung einer aktuellen Verkehrsituation oder einer Verkehrsprognose von einer als normal eingestuften Verkehrsituation ermitteln.

3. Verfahren nach einem der Ansprüche 1 oder 2, **dadurch gekennzeichnet, dass** die ermittelten Routen an das Mauterfassungsgerät (10) übertragen werden und das Mauterfassungsgerät (10) die ermittelten Routen an den Server (30) der Mautzentrale (20) für eine Verkehrsprognose weiterleitet.

4. Verfahren nach Anspruch 3, **dadurch gekennzeichnet, dass** das Mauterfassungsgerät (10) von dem Server (30) der Mautzentrale (20) für die ermittelten Routen eine Verkehrprognose abfragt und die ermittelten Routen für die Verkehrsprognose an den Server (30) weiterleitet, wenn die abgefragte Verkehrsprognose einem Kriterium für eine Verkehrsbehinderung entspricht.

5. Verfahren nach einem der vorhergehenden Ansprüche, **dadurch gekennzeichnet, dass** das Navigationssystem (1) eine aktuelle Position und/oder Messwerte eines Gyrosensors des Mauterfassungsgeräts von dem Mauterfassungsgerät (10) abfragt.

6. Verfahren nach Anspruch 5, **dadurch gekennzeichnet, dass** das Navigationssystem (1), eine Anfrage an das Mauterfassungsgerät (10) übermittelt, die eine regelmäßige Übertragung der aktuellen Position und/oder der Messwerte des Gyrosensors von dem Mauterfassungsgerät (10) an das Navigationssystem (1)festlegt.

7. Verfahren nach Anspruch 5 oder 6, **dadurch gekennzeichnet, dass** das Navigationssystem (1) die eine aktuelle Position anhand von dem Mauterfassungsgerät (10) übermittelten aktuellen Positionen und/oder Messwerten des Gyrosensors und von Sensoren des Navigationssystems (1) bestimmten Positionsdaten und/oder Beschleunigungswerten ermittelt.

8. Verfahren nach einem der vorhergehenden Ansprüche, **dadurch gekennzeichnet, dass** während einer Fahrt entlang einer der ermittelten Routen das Navigationssystem (1) die ermittelte Route an das Mauterfassungsgerät (10) zur Weiterleitung an den Server (30) für Verkehrs informationen übermittelt.

9. Verfahren nach einem der vorhergehenden Ansprüche, **dadurch gekennzeichnet, dass** während einer Fahrt das Mauterfassungsgerät (10) regelmäßig die fällige Mautgebühr an das Navigationssystem (1) überträgt.

10. Verfahren nach einem der vorhergehenden Ansprüche, **dadurch gekennzeichnet, dass** das Navigationssystem (1) eine Anfrage an das Mauterfassungsgerät (10) zum Aufbau eines Mobilfunkkanals sendet und das Navigationssystem (1) und das Mauterfassungsgerät (10) Sprachsignale und/oder Datensignale austauschen, welche das Mauterfassungsgerät (10) mittels seines Mobilfunkmoduls (12) über einen Mobilfunkkanal von und zu einem Endgerät weitervermittelt.

11. Navigationssystem (1) zum Ausführen eines Verfahrens nach einem der vorhergehenden Ansprüche, **dadurch gekennzeichnet, dass** das Navigationssystem (1)ein Anzeigeelement (2), eine Eingabeeinrichtung (3), eine Datenverarbeitungseinrichtung (5), einen Routenermittler (4) und eine Schnittstelle (6) mit einem Kommunikationskanal (21) für ein Mauterfassungsgerät (10) umfasst, wobei das Mauterfassungsgerät (10) in dem gleichen Fahrzeug angeordnet ist, wie das Navigationssystem (1), wobei die Schnittstelle (6) zum Kommunizieren mit dem Mauterfassungsgerät (10), das eine Positionsermittlungseinrichtung (11), die ein satellitengestütztes Ortungssystem aufweist, und eine Sende- und Empfangseinrichtung (12) umfasst, ausgeführt ist.

## Claims

1. Method for operating a navigation system (1) that comprises a display element (2), an input device (3), a data processing device (5), a route ascertainment unit (4) and an interface (6) having a communication channel (21) for a toll collection appliance (10), wherein the toll collection appliance (10) is arranged in the same vehicle as the navigation system (1), having the steps of:
ascertaining routes that lead from a selected start to a selected destination;
requesting toll charges for the ascertained routes from a toll collection appliance, wherein the navigation system (1) requests traffic information for route sections along the ascertained routes from the toll collection appliance (10), the ascertained routes being displayed together with the requested toll charges, **characterized in that** the toll collection appliance (10) comprises a position-finding device (11), which has a satellite-assisted locating system, and a transmission and reception device (12), wherein the transmission and reception device (12) is used by the toll collection appliance (10) to send its current position or the distance covered by it to a central toll station (20), the toll collection appliance (10) loading the traffic information from a server (30) for traffic information.

2. Method according to Claim 1, **characterized in that** the traffic information is transmitted to the navigation system (1) if the toll collection appliance (10) and/or the server (30) ascertain a disparity between a current traffic situation or a traffic forecast and a traffic situation categorized as normal.

3. Method according to either of Claims 1 and 2, **characterized in that** the ascertained routes are transmitted to the toll collection appliance (10), and the toll collection appliance (10) forwards the ascertained routes to the server (30) of the central toll station (20) for a traffic forecast.

4. Method according to Claim 3, **characterized in that** the toll collection appliance (10) requests a traffic forecast from the server (30) of the central toll station (20) for the ascertained routes and forwards the ascertained routes for the traffic forecast to the server (30) if the requested traffic forecast is consistent with a criterion for a traffic hold-up.

5. Method according to one of the preceding claims, **characterized in that** the navigation system (1) requests a current position and/or measured values of a gyro sensor of the toll collection appliance from the toll collection appliance (10).

6. Method according to Claim 5, **characterized in that** the navigation system (1) transmits to the toll collection appliance (10) a request that stipulates a regular transmission of the current position and/or of the measured values of the gyro sensor from the toll collection appliance (10) to the navigation system (1).

7. Method according to Claim 5 or 6, **characterized in that** the navigation system (1) finds the one current position on the basis of current positions and/or measured values of the gyro sensor that are transmitted to the toll collection appliance (10) and position data and/or acceleration values determined by sensors of the navigation system (1).

8. Method according to one of the preceding claims, **characterized in that** during a journey along one of the ascertained routes the navigation system (1) transmits the ascertained route to the toll collection appliance (10) for forwarding to the server (30) for traffic information.

9. Method according to one of the preceding claims, **characterized in that** during a journey the toll collection appliance (10) regularly transmits the payable toll charge to the navigation system (1).

10. Method according to one of the preceding claims, **characterized in that** the navigation system (1) sends a request to the toll collection appliance (10) to set up a mobile radio channel, and the navigation system (1) and the toll collection appliance (10) exchange voice signals and/or data signals that the toll collection appliance (10), using its mobile radio module (12), communicates from and to a terminal via a mobile radio channel.

11. Navigation system (1) for performing a method according to one of the preceding claims, **characterized in that** the navigation system (1) comprises a display element (2), an input device (3), a data processing device (5), a route ascertainment unit (4) and an interface (6) having a communication channel (21) for a toll collection appliance (10), wherein the toll collection appliance (10) is arranged in the same vehicle as the navigation system (1), the interface (6) being designed to communicate with the toll collection appliance (10), which comprises a position-finding device (11), which has a satellite-assisted locating system, and a transmission and reception device (12) .

## Revendications

1. Procédé pour faire fonctionner un système de navigation (1), lequel comporte un élément d'affichage (2), un dispositif de saisie (3), un dispositif de traitement de données (5), un déterminateur d'itinéraire (4) et une interface (6) dotée d'un canal de communication (21) pour un appareil de collecte de péage (10),
l'appareil de collecte de péage (10) étant disposé dans le même véhicule que le système de navigation (1), le procédé comprenant les étapes suivantes :
détermination d'itinéraires qui mènent d'un départ sélectionné à une destination sélectionnée ;
interrogation des montants du péage pour les itinéraires déterminés par un appareil de collecte de péage, des informations de trafic pour des portions d'itinéraire le long des itinéraires déterminés étant interrogées par le système de navigation (1) auprès de l'appareil de collecte de péage (10),
les itinéraires déterminés étant affichés conjointement avec les montants de péage interrogés, **caractérisé en ce que**
l'appareil de collecte de péage (10) comporte un dispositif de détermination de position (11), lequel possède un système de localisation assisté par satellite, ainsi qu'un dispositif d'émission et réception (12), l'appareil de collecte de péage (10) envoyant, avec le dispositif d'émission et réception (12), sa position actuelle ou la distance qu'il a parcourue à une centrale de péage (20), l'appareil de collecte de péage (10) chargeant les informations de trafic depuis un serveur (30) d'informations de trafic.

2. Procédé selon la revendication 1, **caractérisé en ce que** les informations de trafic sont communiquées au système de navigation (1) lorsque l'appareil de collecte de péage (10) et/ou le serveur (30) déterminent un écart entre une situation de trafic actuelle ou une prévision de trafic et une situation de trafic classifiée comme normale.

3. Procédé selon l'une des revendications 1 ou 2, **caractérisé en ce que** les itinéraires déterminés sont transmis à l'appareil de collecte de péage (10) et l'appareil de collecte de péage (10) retransmet les itinéraires déterminés au serveur (30) de la centrale de péage (20) pour une prévision de trafic.

4. Procédé selon la revendication 3, **caractérisé en ce que** l'appareil de collecte de péage (10) interroge le serveur (30) de la centrale de péage (20) afin d'obtenir une prévision de trafic pour les itinéraires déterminés et retransmet les itinéraires déterminés pour la prévision de trafic au serveur (30) lorsque la prévision de trafic interrogée correspond à un critère pour un encombrement du trafic.

5. Procédé selon l'une des revendications précédentes, **caractérisé en ce que** le système de navigation (1) interroge l'appareil de collecte de péage (10) pour obtenir une position et/ou les valeurs mesurées actuelles d'un capteur gyroscopique de l'appareil de collecte de péage.

6. Procédé selon la revendication 5, **caractérisé en ce que** le système de navigation (1) communique une demande à l'appareil de collecte de péage (10), laquelle définit une transmission régulière au système de navigation (1) de la position et/ou des valeurs mesurées actuelles du capteur gyroscopique de l'appareil de collecte de péage (10).

7. Procédé selon la revendication 5 ou 6, **caractérisé en ce que** le système de navigation (1) détermine ladite position actuelle au moyen des positions et/ou valeurs mesurées actuelles, transmises à l'appareil de collecte de péage (10), du capteur gyroscopique et des données de position et/ou valeurs d'accélération définies par des capteurs du système de navigation (1).

8. Procédé selon l'une des revendications précédentes, **caractérisé en ce que** pendant un déplacement le long de l'un des itinéraires déterminés, le système de navigation (1) communique l'itinéraire déterminé à l'appareil de collecte de péage (10) en vue de sa retransmission au serveur (30) d'informations de trafic.

9. Procédé selon l'une des revendications précédentes, **caractérisé en ce que** pendant un déplacement, l'appareil de collecte de péage (10) transmet régulièrement les montants de péage exigibles au système de navigation (1).

10. Procédé selon l'une des revendications précédentes, **caractérisé en ce que** le système de navigation (1) envoie à l'appareil de collecte de péage (10) une demande d'établissement d'un canal de radiocommunication mobile, et le système de navigation (1) et l'appareil de collecte de péage (10) échangent des signaux vocaux et/ou des signaux de données qui sont transférés par l'appareil de collecte de péage (10), au moyen de son module de radiocommunication mobile (12) sur un canal de radiocommunication mobile, depuis et vers un terminal.

11. Système de navigation (1) destiné à mettre en oeuvre un procédé selon l'une des revendications précédentes, **caractérisé en ce que** le système de navigation (1) comporte un élément d'affichage (2), un dispositif de saisie (3), un dispositif de traitement de données (5), un déterminateur d'itinéraire (4) et une interface (6) dotée d'un canal de communication (21) pour un appareil de collecte de péage (10), l'appareil de collecte de péage (10) étant disposé dans le même véhicule que le système de navigation (1), l'interface (6) étant configurée pour communiquer avec l'appareil de collecte de péage (10), lequel comporte un dispositif de détermination de position (11), lequel possède un système de localisation assisté par satellite, ainsi qu'un dispositif d'émission et réception (12).
